Europäisches Patentamt

European Patent Office

Office européen des brevets

(11) Publication number: **0 348 570**
**A1**

## EUROPEAN PATENT APPLICATION

(21) Application number: 88305984.2

(22) Date of filing: 29.06.88

(51) Int. Cl.4: **G11B 20/00** , **H04N 5/91**

(43) Date of publication of application:
**03.01.90 Bulletin 90/01**

(84) Designated Contracting States:
**AT BE CH DE ES FR GR IT LI LU NL SE**

(71) Applicant: **Keen, Thomas Claude Henry**
**26 Betty's Close**
**Newton Longville Milton Keynes, MK17**
**0AN(GB)**

Applicant: **Keen, Audrey**
**26 Betty's Close**
**Newton Longville Milton Keynes, MK17**
**0AN(GB)**

Applicant: **Keen, Paul David**
**26 Betty's Close**
**Newton Longville Milton Keynes, MK17**
**0AN(GB)**

(72) Inventor: **Keen, Thomas Claude Henry**
**26 Betty's Close**
**Newton Longville Milton Keynes, MK17**
**0AN(GB)**
Inventor: **Keen, Audrey**
**26 Betty's Close**
**Newton Longville Milton Keynes, MK17**
**0AN(GB)**
Inventor: **Keen, Paul David**
**26 Betty's Close**
**Newton Longville Milton Keynes, MK17**
**0AN(GB)**

(74) Representative: **Jones, Graham H.**
**Graham Jones & Company 77 Beaconsfield**
**Road Blackheath**
**London SE3 7LG(GB)**

(54) A recording of an information signal.

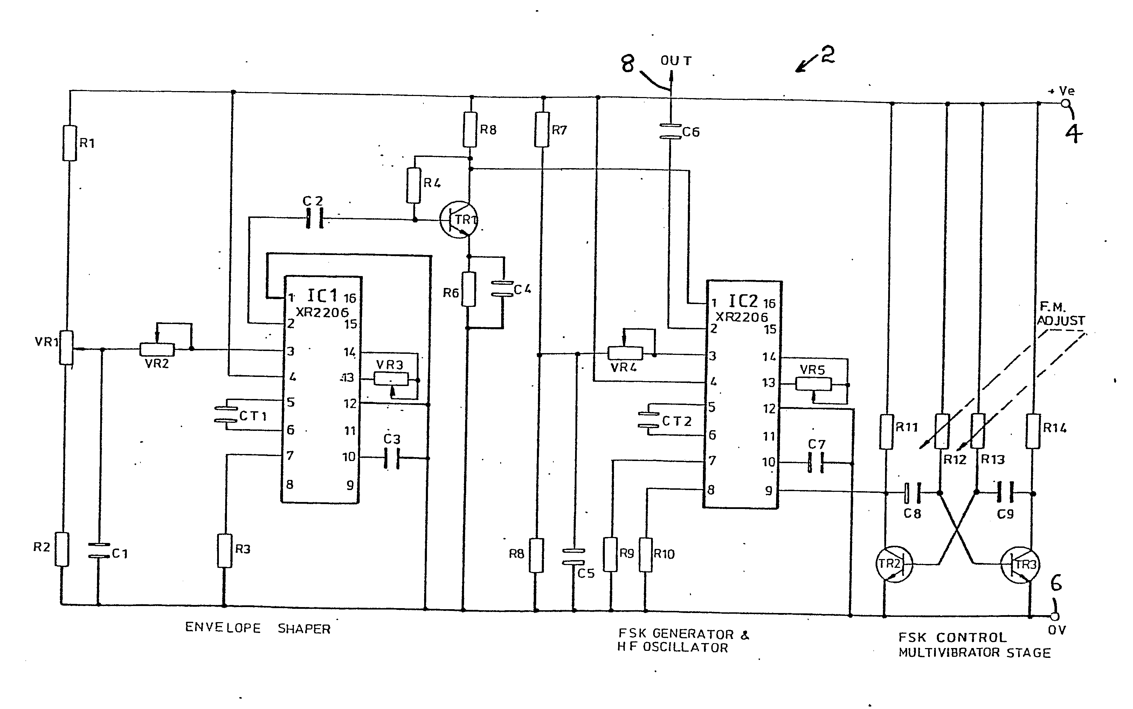

(57) A recording of an information signal, which recording comprises the information signal and a spoiler signal, the spoiler signal being such that it is of a
frequency which has been modulated to be in synchronism with a varying frequency modulating sig-
nal. Also provided are a method of recording an
information signal in which the spoiler signal is also
recorded, and apparatus for producing a recording of
the information signal. The drawing shows a circuit
diagram for the apparatus.

ENVELOPE SHAPER

FSK GENERATOR &
H F OSCILLATOR

FSK CONTROL
MULTIVIBRATOR STAGE

1a

This invention relates to a recording of an information signal. This invention also relates to a method of recording an information signal, and to apparatus for producing a recording of an information signal.

The recording of information signals is well known. The produced recordings may be audio or video recordings. With the known recordings, grooved discs may be transcribed by apparatus including a stylus running in the grooves. Alternatively, magnetic tape recordings, magnetic disc recordings and holographic recordings may be produced. Audio signals are usually recorded on grooved discs or magnetic tape. Because optical signals require a greater signal density, optical signals are usually produced using special magnetic tape recording techniques or, more recently, laser holograms which enable the production of laser discs.

It is well known that original recordings are easily re-recorded to produce unauthorised recordings. These unauthorised re-recordings cause loss of revenue for recording companies and they are also usually illegal. Various attempts have been made to prevent the re-recording of original material in order to produce the unauthorised recordings. These known attempts have not been entirely satisfactory and the production of unauthorised recordings is still rife.

It is an aim of the present invention to obviate or reduce the above mentioned problem.

Accordingly, this invention provides a recording of an information signal, which recording comprises the information signal and a spoiler signal, the spoiler signal being such that it is of a frequency which has been modulated to be in synchronism with a varying frequency modulating signal.

The use of the varying frequency modulating signal is effective to make it either very difficult or impossible to produce re-recordings which are of a satisfactory quality. More specifically, the spoiler signal acts with the information signal to produce beat frequencies which prevent satisfactory re-recording of the information signal. For example, for audio recordings, the produced beat frequencies may interfere with the re-recording bias frequency to produce undesirable frequencies in the audio range. The varying frequency modulating signal prevents the satisfactory filtering of the spoiler signal. It will be appreciated that without the varying frequency modulating signal, a filter could be employed to remove the spoiler signal and thus leave the unspoilt information signal. Even if a fixed frequency modulating signal were to be employed, it would be possible to use a first filter to remove the spoiler signal and a second filter to remove the modulating signal and to possibly leave the required information signal in a sufficiently satisfactory mode to enable the production of a satisfactory re-recording. However, with the use of the varying frequency modulating signal in accordance with the present invention, it is as a practical matter substantially impossible to filter out both the spoiler signal and the varying frequency modulating signal, whilst still leaving the information signal untouched or sufficiently untouched to allow satisfactory re-recording. The use of the varying frequency modulating signal means that any filter employed to try and remove this signal needs to have such a wide band width that it will almost certainly cause distortion of the information signal, especially when it is borne in mind that the spoiler signal itself also has to be filtered. The recording of the present invention may be regarded as giving no interference on conventional playback, a beat frequency on unauthorised copying, and a modulating information signal on filtering with a view to facilitating unauthorised copying.

The varying frequency modulating signal is preferably a frequency sweep varying frequency modulating signal which operates between two predetermined frequency limits. The frequency sweep varying frequency modulating signal may vary from 300Hz to 600Hz.

As an alternative to using a frequency sweep, the varying frequency modulating signal may be varied between two predetermined values but these two predetermined values will then be clearly defined and they will make filtering easier than employing a varying sweep frequency modulating signal.

The spoiler signal may be an amplitude envelope shaped spoiler signal.

The spoiler signal will usually be a high frequency signal and this can cause heat generation in disc cutting when the recording is in the form of a disc recording. The use of the amplitude envelope shaping enables the spoiler signal to alternate between cutting and non-cutting cooling periods. This alternation of the spoiler signal can be done in a controlled ratio to enable satisfactory disc cutting without undue heat generation. This in turn prevents wear of machine parts due to the overheating.

The recording may be in the form of an audio recording, a video recording, or in the form of broadcasting carrier waves. With broadcasting carrier waves, reception apparatus for the broadcasting carrier waves, for example radios and televisions, may require appropriate switching controls.

The present invention also provides a method of recording an information signal in which a spoiler signal is also recorded, the spoiler signal being such that it is of a frequency which has been modulated to be in synchronism with a varying frequency modulating signal.

In the method of the invention, the spoiler signal and the varying frequency modulating signal may be as described above.

The present invention also provides apparatus for producing a recording of an information signal, which apparatus comprises generator means for generating a spoiler signal, and modulator means for modulating the spoiler signal to be in synchronism with a varying frequency modulating signal.

The modulator means may be a frequency sweep modulator means.

The frequency sweep modulator means may comprise a control oscillator and a timing resistor, the timing resistor being arranged to receive peak output voltage from the control oscillator via resistor means.

Embodiments of the invention will now be described solely by way of example and with reference to the accompanying drawing which shows a circuit diagram for apparatus for producing a recording of an information signal.

Referring to the drawing, there is shown a circuit 2 for producing a recording of an information signal, the recording being in the form of a disc recording. The circuit 2 comprises a pair of terminals 4, 6 and a resistor biasing chain comprising resistors R1, R2 and a variable resistor VR1. The variable resistor VR1 is employed to vary the recording bias in order to enable a fixed d.c. output.

A capacitor C1 acts like an emitter bypass to decouple the signal at this point in the circuit 2, in order to stop voltage fluctuations and resultant feedback.

The circuit 2 also comprises a variable resistor VR2 which is connected to pin 3 of an integrated circuit IC1. The variable resistor VR2 acts as a volume control.

A timing capacitor CT1 is connected to pins 5 and 6 of the integrated circuit IC1. A resistor R3 is connected to pin 7 of the integrated circuit IC1 and the resistor R3 controls current flow through the integrated circuit IC1 and therefore also controls the frequency.

A variable resistor VR3 is connected as shown to pins 13, 14 of the integrated circuit IC1 and the variable resistor VR3 is employed for wave shaping purposes.

Pin 2 of the integrated circuit IC1 connects to a transistor TR1 via a capacitor C2. The transistor TR1 is employed for changing the circuit impedance and for effecting signal clipping. The transistor TR1 is required for producing a signal with a desired mark space ratio which is effective to allow a recording to be made on the disc with cutting periods and non-cutting cooling periods. The non-cutting cooling periods prevent overheating during cutting and thus prevent premature wear of machine parts and especially cutter heads due to the overheating.

The integrated circuit IC1 and its illustrated associated resistors, capacitors and transistor TR1 act generally as a signal envelope shaper.

The circuit 2 also comprises a part which acts as a frequency shift key generator and a high frequency oscillator. This part of the circuit includes an integrated circuit IC2. Two resistors R9 and R10 are respectively connected to pins 7 and 8 of the integrated circuit IC2. These two resistors R9, R19 act similarly as the resistor R3 for the integrated circuit IC1. Two resistors R9, R10 are however required for the integrated circuit IC2 because the frequency shift key generator feeds into pin 9 and, when there is a voltage change at pin 9, it switches either of the two resistors R9, R10 to alter the operating frequency. As will be appreciated, the integrated circuit IC2 forms a high frequency generator or oscillator.

A timing capacitor CT2 is connected across pins 5, 6 of the integrated circuit IC2 and acts similarly as the timing capacitor CT1 which is connected across pins 5 and 6 of the integrated circuit IC1.

A variable resistor VR5 is connected across pins 13, 14 of the integrated circuit IC2 and is employed for signal wave shaping purposes.

A capacitor C6 is employed in an output line 8 and this capacitor C6 acts as an isolating capacitor to stop, for example, d.c. from being picked up from disc cutting equipment. The output along output line 8 is fed to a disc cutter (not shown). The feed will usually be via a high pass filter (not shown) to cut out lower frequencies. The high pass filter may, for example, cut out frequencies below 500Hz.

The circuit 2 also has a frequency shift key control multi-vibrator stage as shown in the drawing. This part of the circuit 2 includes transistors TR2 and TR3 which are connected back to back as shown. The transistors TR2 and TR3 together with the capacitors C8, C9 form an astable multi-vibrator which oscillates at a prearranged frequency. By varying the resistance at resistors R12 and R13, the frequency modulation is able to be adjusted.

The circuit 2 may be regarded as essentially two sine-wave oscillators built around the integrated circuits IC1 and IC2. In use of the circuit 2, the integrated circuit IC1 is a low frequency stage which may be set at around 10Hz. The function of the integrated circuit IC1 is to generate a low frequency wave form to be applied to pin 1 (after processing to give a single polarity wave, clipped to produce a mark space ratio as mentioned above) to envelope shape the high frequency output of the integrated circuit IC2. As mentioned above, the reason for the envelope shaping is that sustained high frequency cutting on to acetate discs produces heat which is most pronounced at the greatest diameter of the disc. This is because the speed at which the acetate meets the cutting head is greatest at this point, the speed decreasing proportionally to the reducing circumference as the cutting head cuts towards the centre of the disc. The cutting head has to be sufficiently light to enable relatively large lateral excursions at up to approximately 22,000 times a second. The excursion from the straight and narrow alone produces great frictional heat which is normally dispersed and flame-damped by a jet of helium gas. The helium gas is an inert gas which prevents burning by excluding oxygen from the cutting environment. The helium gas also serves to conduct away the frictional heat generated by the cutting process. The generation of heat during disc cutting is of course well known but the circuit 2 is able to overcome this problem by producing a signal which alternates between cutting and cooling periods, in a controlled ratio. This is permitted by the above mentioned amplitude envelope signal shaping. By preventing the generation of excessive heat, the life of the cutting head can be extended compared with existing arrangements.

The high frequency stage of the circuit 2 is built around the integrated circuit IC2. It is this stage of the circuit 2 where the spoiler signal is generated and is arranged to beat with the bias oscillator frequency (analogue) or sampling frequency (digital) of the attempted recording, thereby producing intrusive and undesirable sounds to ruin the quality of any attempted unauthorised recording.

The circuit 2 also prevents filtering attempts at removing the spoiler signal by having the spoiler signal such that it is of a frequency which has been modulated to be in synchronism with a varying frequency modulated signal. This takes advantage of the fact that all filter systems are reliant on the basic principle of frequency sensitive components, namely capacitance. This frequency sensitivity takes the form of the reactive value in ohms, changing with changing frequency. Doubling the frequency, halves the value of the reactance. The frequency shift key facility of the integrated circuit IC2 is employed to generate two distinct frequencies, for example of approximately 17KHz and 21KHz. These two frequencies are externally controlled by the multivibrator stage, operating at approximately 600Hz, on to pin 9 of the integrated circuit IC2. When the voltage on the pin 9 goes high, the timing resistor R9 on pin 7 controls the output frequency of the integrated circuit IC2. As the multi-vibrator voltage goes low, the timing resistor R10 on pin 8 comes into effect. Since these changes take place at the switching rate (i.e. the multi-vibrator frequency) of approximately 600Hz, the reactance of any filter will also fluctuate in harmony. This produces a voltage output across the filter, in synchronism with the switching rate, and appears across the attempted unauthorised re-recording as audio interference, equal to the intrusiveness of the unfiltered beat note of the spoiler signal.

Any attempt at a notch filter to remove only this frequency from the filtered recording will be rendered impossible by the varying modulating frequency. The varying modulating frequency is not audible at ultrasonic frequencies when unfiltered. The modulating frequency may be varied by, for example, speech. Any type of speech may be employed. Thus the circuit 2 provides an effective and viable spoiler signal which requires no special de-coding circuitry to be fitted to recorder apparatus.

In an alternative embodiment of the invention, the above mentioned frequency shift keying is not employed due to the fact that the frequency limits of the fluctuating spoiler signal are clearly defined. In the alternative embodiment of the invention, a frequency sweep is employed, the frequency sweep being between two predetermined frequency limits. The frequency sweep is advantageously employed because it can be arranged to cross all bias oscillator frequencies in diverse tape recorders.

The frequency sweep may be achieved by employing a control oscillator having a peak voltage output of three volts. The peak output voltage may be applied to the top of the timing resistor R9 connected to pin 7 of the integrated circuit IC2. The peak output voltage may be applied via a resistor of appropriate value. Since pin 7 of the integrated circuit IC2 is internally biased at three volts, this is thus the value of the control voltage to be used.

In operation of the modified circuit, the modulating audio tone may be varied from, for example, 300Hz to 600Hz in order to prevent it being removed by a notch filter. More specifically, and by way of example, if the modulating audio tone was a fixed 600Hz, which appeared across any filter designed to remove the spoiler signal, then anyone wishing to re-record the music would simply place a low pass filter to remove the high frequency spoiler signal. This in turn would de-modulate the frequency modulation wave form, releasing the fixed 600 cycles per second across the desired musical programme to be re-recorded. An appropriate high pass notch filter would then remove the 600Hz with a little attenuation either side of, for example, ten per cent band width. While this slight attenuation would still impair the re-recording, the re-recording might well still be acceptable. However, if the frequency modulation covers a much wider band as in the present invention, then the re-recording is proportionally less acceptable.

It is to be appreciated that the embodiments of the invention described above with reference to the accompanying drawing have been given by way of example only and that modifications may be effected. Thus, for example, the circuit layout of the circuit 2 may be varied and different components may be employed. Also, the present invention may be applied to video recordings which will be made at higher frequencies. The recordings may be on compact discs and also on tape. The recordings also extend to broadcasting carrier waves. The integrated circuits IC1 and IC2 may be different from the illustrated XR2206 chips. The information signal, for example music or singing, may be cut at a lower amplitude with respect to the spoiler signal to facilitate the beat frequency function of the spoiler signal. This would then require replay at a slightly higher volume than normal.

Where a recording is to be made on tape, then the anti-copying signal may be added to the tape by causing the circuit of the invention to interrupt the tape recorder's bias oscillator path at the output of that oscillator, where the spoiler signal may be added to the bias oscillation in a way which simply shifts the bias point of that oscillator signal in conformity with the complex spoiler signal. The resulting wave form will be a constant amplitude oscillation of a frequency determined by the bias oscillator but deviating about a mean in synchronism with the applied spoiler signal. The wave form may then be passed via a high pass filter which removes any beat frequencies developed during the mixing stage. The output from the filter may then be re-introduced into the normal recording circuitry of the tape recorder, thus replacing the original "clean" bias oscillation. Recording may now take place in the normal way, and the spoiler signal is thus integrated into the resulting record in order to prevent further copying.

## Claims

1. A recording of an information signal, which recording comprises the information signal and a spoiler signal, the spoiler signal being such that it is of a frequency which has been modulated to be in synchronism with a varying frequency modulating signal.

2. A recording according to claim 1 in which the varying frequency modulating signal is a frequency sweep varying frequency modulating signal which operates between two predetermined frequency limits.

3. A recording according to claim 2 in which the frequency sweep varying frequency modulating signal varies from 300Hz to 600Hz.

4. A recording according to claim 3 in which the spoiler signal is an amplitude envelope shaped spoiler signal.

5. A method of recording an information signal in which a spoiler signal is also recorded, the spoiler signal being such that it is of a frequency which has been modulated to be in synchronism with a varying frequency modulating signal.

6. A method according to claim 5 in which the varying frequency modulating signal is a frequency sweep varying frequency modulating signal which operates between two predetermined frequency limits.

7. A method according to claim 6 in which the frequency sweep varying modulating signal varies from 300Hz to 600Hz.

8. Apparatus for producing a recording of an information signal, which apparatus comprises generator means for generating a spoiler signal, and modulator means for modulating the spoiler signal to be in synchronism with a varying frequency modulating signal.

9. Apparatus according to claim 8 in which the modulator means is a frequency sweep modulator means.

10. Apparatus according to claim 9 in which the frequency sweep modulator means comprises a control oscillator and a timing resistor, the timing resistor being arranged to receive peak output voltage from the control oscillator via resistor means.

FIG 2

ENVELOPE SHAPER

FSK GENERATOR & H F OSCILLATOR

FSK CONTROL MULTIVIBRATOR STAGE

European Patent Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | US-A-4 086 634 (EMORY G. COOK) * column 2, line 21 - line 42, column 6, line 3 - line 26 * --- | 1,2,5,6 ,8,9 | G 11 B 20/00 H 04 N 5/91 |
| A | GB-A-2 164 481 (P.D. KEEN & AL.) * page 1, line 117 - page 2, line 2 * --- | 1,2,4,6 | |
| A | WO-A-8 400 635 (TVI SYSTEMS) * page 2, line 12 - page 3, line 7 * ----- | 1,5,8 | |

TECHNICAL FIELDS SEARCHED (Int. Cl.3)

G 11 B 20/00
H 04 N 5/00

The present search report has been drawn up for all claims

| Place of search | Date of completion of the search | Examiner |
|---|---|---|
| BERLIN | 23-02-1989 | GERARD E.A.S. |

EPO FORM 1503 03.82 (P0401)